## Europäisches Patentamt
## European Patent Office
## Office européen des brevets

(11) Veröffentlichungsnummer: **0 123 670**
A1

(12) # EUROPÄISCHE PATENTANMELDUNG

(21) Anmeldenummer: 84890051.0

(22) Anmeldetag: 16.03.84

(51) Int. Cl.³: **B 60 P 3/10**
B 62 B 1/20, B 62 D 63/06

(30) Priorität: 08.04.83 AT 1249/83

(43) Veröffentlichungstag der Anmeldung:
31.10.84 Patentblatt 84/44

(84) Benannte Vertragsstaaten:
DE FR GB IT NL SE

(71) Anmelder: Stiepock, Herbert
Hartlebengasse 1-17/70/1/5
A-1220 Wien(AT)

(72) Erfinder: Stiepock, Herbert
Hartlebengasse 1-17/70/1/5
A-1220 Wien(AT)

(54) Transportanhänger für mindestens ein Segelbrett.

(57) Die Erfindung betrifft einen Transportanhänger für mindestens ein Segelbrett, mit einem Rahmen, der zwei V-förmige Schenkel (3) und einen nach oben gekröpften Vorderteil (2) aufweist an den eine Anhängeeinrichtung (13) vorgesenen ist. An seinem hinteren Ende befinden sich zwei jeweils an einem Schenkel angebrachte, ein Rad (7) tragende Radgabeln (6). Als Auflage für das Segelbrett dient der Querbalken (4) im hinteren und (5) im vorderen Bereich.

Die V-formig angeordneten Schenkel (3) des Rahmens (1) können im mittleren Bereich (9) eine Steckverbindung oder Scharniere zum Zusammenklappen aufweisen. Da der Transportanhänger ein auf ihn aufgelegtes Segelbrett praktisch in der Waage hält, gelangt nur eine geringe Belastung auf die Anhängekupplung (13) am Fahrrad (17).

Fig. 2

EP 0 123 670 A1

## Transportanhänger für mindestens ein Segelbrett

### Neue Beschreibung:

Die Erfindung betrifft einen Transportanhänger für mindestens ein Segelbrett, mit einem Rahmen, der zwei horizontale, V-förmig angeordnete Schenkel und einen an die Spitze des V anschließenden, nach oben gekröpften Vorderteil aufweist und an seinem hinteren Ende mit zwei jeweils an einem Schenkel angebrachten, ein Rad tragenden Radgabeln versehen ist. Die Schenkel sind an ihrem vorderen bzw. hinteren Abschnitt über jeweils einen als Auflage für das bzw. die Segelbretter dienenden Querbalken miteinander verbunden. Am freien Ende des gekröpften Vorderteiles ist eine Anhängeeinrichtung vorgesehen und an jedem Querbalken ist ein Gummiband oder ein Spanngurt zum Befestigen des bzw. der Segelbretter angeordnet.

Aufgabe der Erfindung ist es, einen von einem Moped, Mofa oder Fahrrad gezogenen oder von Hand schiebbaren Anhänger der einleitend geschilderten Art zu schaffen, der auf nur zwei Rädern geführt, daher kurvenbeweglich ausgebildet ist und teilweise auf der Anhängekupplung abgestützt ist. Damit soll dem Umstand Rechnung getragen werden, daß man nicht nur mit dem Kraftfahrzeug sondern auch z.B. mit dem Fahrrad die Möglichkeit hat, sicher und unbeschwerlich den Weg mit einem Segelbrett zum oft nahegelegenen Wasser problemlos zurücklegen zu können. Ferner soll, insbesondere zum Zwecke einer platzsparenden Unterbringung des Transportanhangers bei Nichtgebrauch, der Anhänger klappbar ausgestaltet sein.

Gelöst wird diese Aufgabe bei einem Transportanhänger der eingangs genannten Art dadurch, daß die V-förmig angeordneten Schenkel des Rahmens im mittleren Bereich jeweils mit einem Scharnier zum Zusammenklappen versehen sind, wobei die Scharnierachsen quer zur Rahmenlängsachse angeordnet sind und miteinander fluchten, wobei die Schenkel in der ausgeklappten Endstellung fixierbar sind, und daß die Radgabeln jeweils an einem Ende des hinteren Querbalkens lösbar befestigt und mittels je einer im Bereich ihres die Radachse tragenden Endes

0123670

angreifenden Schrägstrebe mit dem entsprechenden Schenkel
lösbar verbunden sind.

Der Rahmen des Transportanhängers für Segelbretter besteht
zweckmäßig aus Stahl oder Aluminium. Die    das bzw. die
Segelbretter tragenden Querbalken bestehen aus Holz, sie
können aber ebenso gut aus Aluminium gefertigt werden. Wie
bereits erwähnt, sind die Radgabeln lösbar an dem Rahmen
befestigt. Der Vorteil einer platzsparenden Unterbringung des
zusammenklappbaren Transportanhängers wird hiedurch noch
vergrößert. Der waagrecht liegende Rahmen kann je nach Wunsch
mit Taschen versehen sein.

Im folgenden wird beispielhaft ein Verfahren für die Herstellung
eines Anhängers beschrieben: Ein Aufbau von passenden Abmessungen
wird aus einem Aluminium-Formrohr zugeschnitten, indem dieses
zu einem Dreieck geformt und durch Schweißen an seinen Enden
verbunden wird. Die beiden Radgabeln werden sodann mit dem
Aufbau verschweißt. Die beiden Lauträder werden an ihren Achsen
durch Schraubenmuttern an die jeweilige Radgabel angeschraubt,
die Querbalken mit Schrauben befestigt und eine Zubehörtasche
unterhalb der V-förmig angeordneten Schenkel des Rahmens angebracht.

Ein in der beschriebenen Weise hergestellter Anhänger ist
billig in der Produktion, wendig in der Handhabung und kann
auf ebener Fahrbahn mit nur geringem Rollwiderstand bewegt,
insbesondere mit einem Fahrrad gezogen werden.

Zum besseren Verstandnis der Erfindung wird auf die Zeichnungen
hingewiesen, welche in schematischer Form ein Ausführungsbeispiel der Erfindung zeigen.

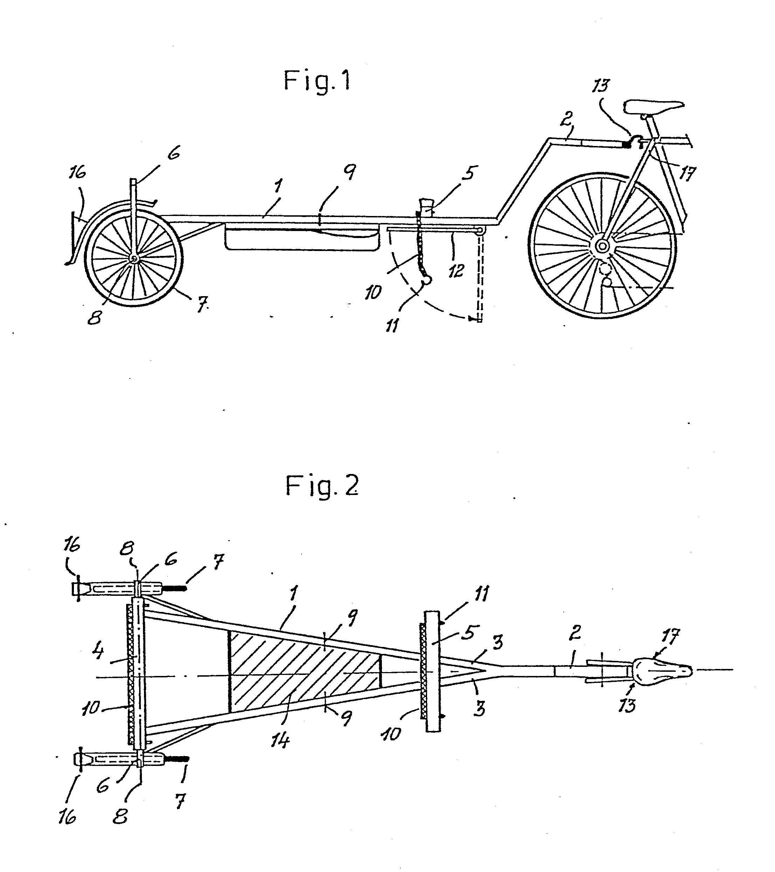

In den Zeichnungen stellt die Fig. 1 eine Seitenansicht und

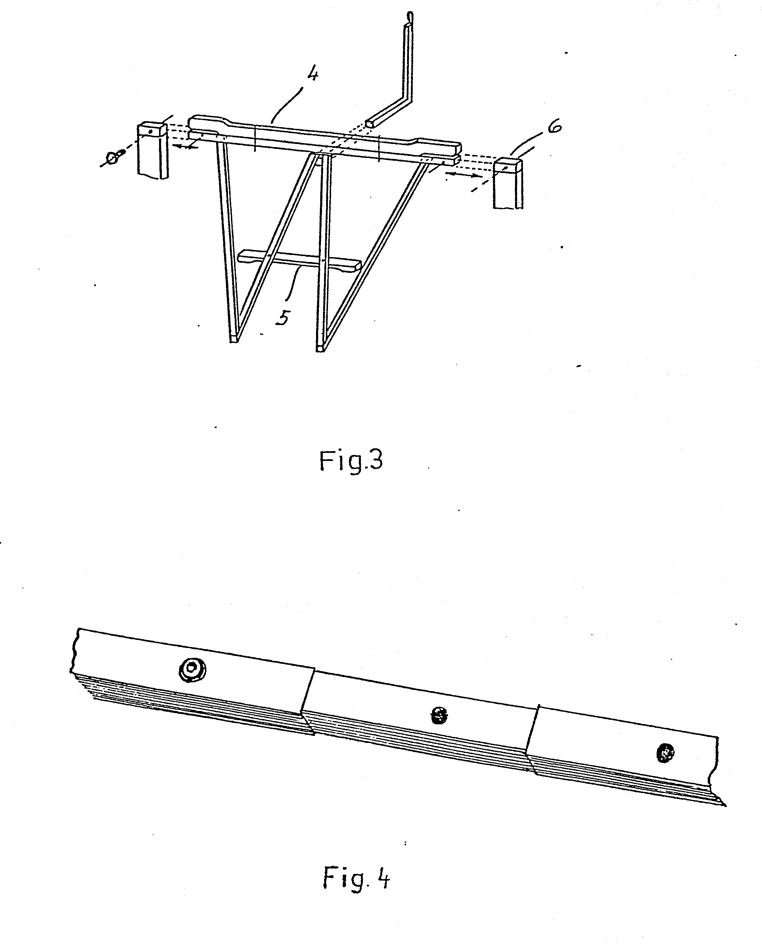

die Fig. 2 eine Draufsicht auf den Anhänger dar. Die Fig. 3
zeigt den Anhänger im zusammengeklappten Zustand und deutet
die Demontierbarkeit der Radgabeln an. . Die Fig. 4 zeigt,
daß die V-förmig angeordneten Schenkel des Rahmens im mittleren
Bereich anstelle der Scharniere mit einer Steckverbindung ver -
sehen werden können.

Der Transportanhänger besitzt einen Rahmen 1 mit zwei V-förmig angeordneten Schenkeln 3 und einen an die Spitze des V anschließenden, nach oben gekröpften Vorderteil 2. Die beiden Schenkel 3 sind im Bereich ihres vorderen und hinteren Endes über jeweils einen Querbalken 4,5 miteinander verbunden. Die Querbalken 4,5 dienen als Auflage für ein oder mehrere – in der Zeichnung nicht dargestellte – Segelbretter. Weiters sind an den Querbalken 4,5 zum Festzurren des Segelbrettes bzw. der Segelbretter Gummibänder oder Spanngurte 10 verankert, die Verschlußhaken oder -schnallen 11 aufweisen. Der Rahmen 1 ist über zwei Laufräder 7 auf dem Boden abgestützt, deren Achsen 8 an je einer Radgabel 6 angeordnet sind, wobei die Radgabeln 6 jeweils an einem Ende des hinteren Querträgers 4 lösbar, z.B. mittels Schraubmuttern, befestigt sind. Zur Erleichterung des Be- und Entladens weist der Anhänger einen Stützfuß 12 auf, der zweckmäßig an jener Stelle des Rahmens 1 vorgesehen ist, an welcher der nach oben gekröpfte Rahmenvorderteil 2 in die beiden V-förmig angeordneten Schenkel 3 übergeht. Im Mittelteil jedes Schenkels ist ein Scharnier 9 vorgesehen. Die im wesentlichen parallel zur Radachse verlaufenden Scharnierachsen fluchten miteinander. Durch in der Zeichnung nicht dargestellte Mittel kann der Rahmen in der auseinander geklappten Betriebsstellung fixiert werden. In dem Bereich zwischen den Querbalken 4,5 kann an den Schenkeln 3 ein Zubehörbehälter 14 aus flexiblem Material, vorzugsweise in Form einer verschließbaren Tasche, angeordnet sein. Die mit dem hinteren Querbalken 4 vorzugsweise lösbar verbundenen Radgabeln 6 stützen sich jeweils über eine von der Radgabelinnenseite zum entsprechenden Schenkel 3 führende und mit diesem Schenkel 3 lösbar verbundene Schrägstrebe 15 am Rahmen 1 ab. Entsprechend den gesetzlichen Vorschriften ist der Transportanhänger mit Rückstrahlern 16 ausgestattet.

Da der Transportanhänger ein auf ihn aufgelegtes Segelbrett praktisch in der Waage hält, gelangt nur eine geringe Belastung auf die Anhängekupplung 13 am Fahrrad 17. Dadurch ist eine einfache und kraftsparende Bewegung des beladenen Anhängers, u. zw. auch von Hand aus, möglich.

Patentansprüche:

1. Transportanhänger für mindestens ein Segelbrett, mit einem Rahmen, der zwei horizontale, V-förmig angeordnete Schenkel und einen an die Spitze des V anschließenden, nach oben gekröpften Vorderteil aufweist und an seinem hinteren Ende mit zwei jeweils an einem Schenkel angebrachten, ein Rad tragenden Radgabeln versehen ist, wobei die Schenkel an ihrem vorderen und hinteren Abschnitt über jeweils einen als Auflage für das bzw. die Segelbretter dienenden Querbalken miteinander verbunden sind und wobei ferner am freien Ende des gekröpften Vorderteiles eine Anhängeeinrichtung vorgesehen ist, dadurch gekennzeichnet, daß die V-förmig angeordneten Schenkel (3) des Rahmens (1) im mittleren Bereich jeweils mit einem Scharnier (9) zum Zusammenklappen versehen sind, wobei die Scharnierachsen quer zur Rahmenlängsachse angeordnet sind und miteinander fluchten, wobei die Schenkel (3) in der ausgeklappten Endstellung fixierbar sind, und daß die Radgabeln (6) jeweils an einem Ende des hinteren Querbalkens (4) lösbar befestigt und mittels je einer im Bereich ihres die Radachse (8) tragenden Endes angreifenden Schrägstrebe (15) mit dem entsprechenden Schenkel (3) lösbar verbunden sind.

2. Transportanhänger nach Anspruch 1, dadurch gekennzeichnet, daß an den V-förmig angeordneten Schenkeln (3) im Bereich zwischen den Querbalken (4, 5) ein Zubehörbehälter (14) aus flexiblem Material angebracht ist, der vorzugsweise als verschließbare Tasche ausgebildet ist.

3. Transportanhänger nach Anspruchen 1 u. 2. dadurch gekennzeichnet, daß die V-förmig angeordneten Schenkel (3) des Rahmens (1) im mittleren Bereich anstelle der Scharniere (9) mit Steckverbindungen versehen werden könen.

Wien, am 27.Dez. 1983

DI.Pf/B 1983 12 14/

Herbert Stiepock

durch:

Fig.1

Fig.2

Fig.3

Fig. 4

Europäisches
Patentamt

**EUROPÄISCHER RECHERCHENBERICHT**

0123670
Nummer der Anmeldung

EP 84 89 0051

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A | FR-A-1 444 185 (OPPIKOFER & PIPOZ) <br> * Seite 1, rechte Spalte, Zeilen 19-37; Abbildung 1 * | 1,3 | B 60 P 3/10 <br> B 62 B 1/20 <br> B 62 D 63/06 |
| | --- | | |
| A | US-A-3 386 749 (ROUDANEZ) <br> * Spalte 2, Zeilen 2-12; Abbildungen 1,2 * | 1 | |
| | --- | | |
| A | GB-A-1 601 343 (SIOHU) <br> * Seite 1, Zeile 94 - Seite 2, Zeile 19; Abbildungen 4,5 * | 1 | |
| | --- | | |
| A | FR-A-2 268 668 (CETEGE) <br> * Seite 6, Zeilen 5-9; Abbildung 21 * | 2 | |
| | ----- | | **RECHERCHIERTE SACHGEBIETE (Int. Cl. ³)** |
| | | | B 63 B 35/00 <br> B 62 D 63/00 <br> B 62 B 1/00 <br> B 60 P 3/00 <br> B 60 R 9/00 <br> B 62 K 27/00 |

Der vorliegende Recherchenbericht wurde für alle Patentansprüche erstellt.

| Recherchenort | Abschlußdatum der Recherche | Prüfer |
|---|---|---|
| DEN HAAG | 21-06-1984 | OSBORNE J. |